# FASCICULE DE BREVET EUROPEEN

(11) **EP 3 937 023 B1**
(45) Date de publication et mention de la délivrance du brevet: **10.01.2024**
(21) Numéro de dépôt: 21184774.4
(22) Date de dépôt: 09.07.2021
(51) Int. Cl.: G06F 13/42

(54) **PROCEDE ET SYSTEME DE COMMUNICATION BIDIRECTIONNEL ENTRE DEUX UNITES COMMUNICANTES**
VERFAHREN UND SYSTEM ZUR BIDIREKTIONALEN KOMMUNIKATION ZWISCHEN ZWEI KOMMUNIZIERENDEN EINHEITEN
METHOD AND SYSTEM FOR BI-DIRECTIONAL COMMUNICATION BETWEEN TWO COMMUNICATING UNITS

(30) Priorité: 09.07.2020 FR 2007264
(43) Date de publication de la demande: 12.01.2022
(73) Titulaire: THALES, 92190 Meudon (FR)
(72) Inventeur: GABILLE, Martial, 49309 CHOLET (FR); RICHARD, Patrice, 49309 CHOLET (FR)
(74) Mandataire: Atout PI Laplace

(56) Documents cités:
- Compaq Hewlett-Packard: "Universal Serial Bus Specification version 2.0", , 27 avril 2000 (2000-04-27), XP055532152, Extrait de l'Internet: URL:usb.org [extrait le 2018-12-10]

## Description

### Art antérieur

La présente invention concerne généralement les protocoles de communication, et en particulier un procédé de communication bidirectionnel entre deux unités communicantes ainsi qu'un système de communication mettant en oeuvre le procédé.

La présente invention s'applique notamment au domaine des communications de type point-à-point entre deux unités communicantes susceptibles d'échanger des informations numériques de manière sporadique et selon un débit pouvant être asymétrique, c'est-à-dire différent selon le sens de la communication, et variable au cours du temps. Un tel type de communication est largement utilisé dans de nombreux systèmes de communication comprenant une unité communicante responsable de l'acquisition de données, et une autre unité communicante responsable du traitement des données acquises. Les données acquises peuvent être analogiques auquel cas l'unité communicante responsable de leur acquisition procède à leur numérisation avant de les transmettre à l'autre unité communicante. Des exemples d'unités communicantes responsables de l'acquisition de données comprennent des convertisseurs numériques analogiques (CNA) et des cartes FPGA. L'unité communicante responsable du traitement des données acquises peut, par exemple, être un ordinateur, un modem, ou autre.

L'échange d'informations entre deux unités communicantes s'effectue généralement en série et se base sur un protocole de communication définissant des règles d'échange de données numériques entre les deux unités communicantes. Des solutions existantes utilisent des protocoles de communication conçus pour régir des communications à débit symétrique, qui s'effectuent de manière continue dans le temps à très haut débit. Par exemple, les protocoles de communication JESD204B/JESD204C définissent un échange d'informations, encore appelées échantillons, de manière continue dans le temps en utilisant des liens séries opérant à un débit symétrique préalablement défini et compris entre 1 Gb/s et 32 Gb/s.

Les solutions existantes sont généralement incompatibles avec de nombreux systèmes de communication qui requièrent un débit particulier, comme par exemple un débit asymétrique, un débit variable au cours du temps et/ou un faible débit (pouvant, pendant des fenêtres temporelles, être nul).

Il existe donc un besoin pour un procédé et un système de communication amélioré entre deux unités communicantes capable de s'adapter à de tels besoins en termes de débit.

Le document XP055532152 divulgue la spécification USB selon laquelle la communication entre deux appareils est lancée par le récepteur et réalisée au moyen de paquets comprenant un en-tête.

### Définition générale de l'invention

L'invention est définie dans les revendications indépendantes. Des aspects préférés sont définis dans les revendications dépendantes.

### Brève description des figures

D'autres caractéristiques et avantages de l'invention apparaîtront à l'aide de la description qui suit et des figures dans lesquels :
[Fig. 1] représente un système de communication selon un mode de réalisation de l'invention ;
[Fig. 2] est un organigramme représentant un procédé de communication selon un premier mode de réalisation de l'invention ;
[Fig. 3] est un organigramme représentant un procédé de communication selon un deuxième mode de réalisation de l'invention ;
[Fig.4] est un organigramme représentant un procédé de communication, selon un autre mode de réalisation de l'invention ;
[Fig. 5] est un organigramme représentant un procédé de communication, selon un autre mode de réalisation de l'invention.

### Description détaillée

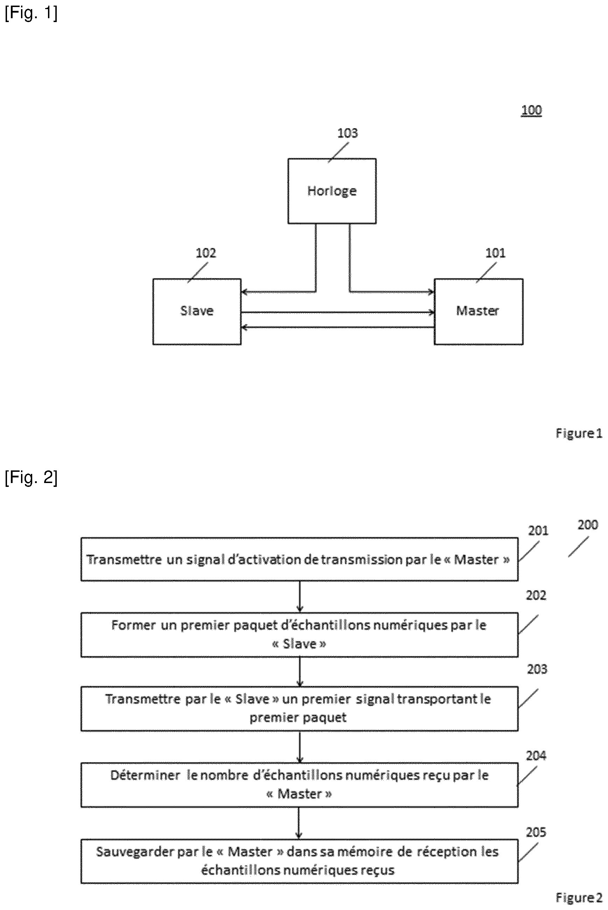

La figure 1 représente un système de communication 100 dans lequel un procédé de communication peut être implémenté selon des modes de réalisation de l'invention. Le système de communication 100 comprend une première unité communicante 101, une seconde unité communicante 102 et un générateur de signaux d'horloge 103. Les unités communicantes peuvent être interconnectées de manière filaire (câble coaxial, fibre optique, ou autre) ou sans fil.

Les deux unités communicantes 101, 102 peuvent être équipées de ressources matérielles et logicielles permettant d'implémenter une pile de protocoles comprenant un ou plusieurs protocoles de communication. Selon le modèle utilisé pour décrire le déroulement d'une communication entre les deux unités communicantes 101, 102, au moins un protocole de communication peut être mis en oeuvre au niveau de chaque couche formant le modèle de communication, le modèle OSI étant un exemple de modèle de communication. En particulier, au moins un protocole de communication « couche physique » définissant les règles d'acheminement de données numériques entre les deux unités communicantes 101, 102 peut être utilisé. Les données numériques constituent la plus petite unité d'information et peuvent être des bits binaires. Le protocole de communication « couche physique » sont choisis parmi les protocoles JESD204B et JESD204C définissant un échange d'échantillons numériques entre deux unités communicantes 101, 102, un échantillon numérique étant représenté par une ou plusieurs données numériques. Les protocoles JESD204B et JESD204C définissent un échange bidirectionnel simultané (Full Duplex) d'échantillons numériques selon un débit symétrique et fixe au cours du temps, le débit étant préalablement choisi entre 1 Gbit/s et 32 Gbit/s. L'échange d'échantillons numériques selon de tels protocoles est permanent au cours du temps, même en absence d'échantillons numériques à transmettre par l'une des deux unités communicantes 101, 102.

Chacune des deux unités communicantes 101, 102 peut être équipée d'au moins deux mémoires internes, volatiles ou non volatiles, configurées pour sauvegarder des données numériques représentant un ou plusieurs échantillons numériques. Dans un mode de réalisation, chaque unité communicante 101 et 102 peut comprendre une première mémoire interne et une seconde mémoire interne. La première mémoire interne d'une unité communicante donnée (par exemple 102) peut être une mémoire de type « émission » configurée pour stocker des échantillons numériques destinés à être transmis à l'autre unité communicante (par exemple 101). De tels échantillons numériques peuvent être générés par un convertisseur analogique-numériques (CAN) intégré dans l'unité communicante émettrice. La deuxième mémoire interne d'une unité communicante donnée (par exemple 101) peut être une mémoire de type « réception » configurée pour stocker des échantillons numériques reçus de l'autre unité communicante (par exemple 102).

Les deux unités communicantes 101, 102 peuvent en outre comprendre un ou plusieurs registres dans lesquels des informations nécessaires au fonctionnement de différents protocoles de communication peuvent être sauvegardées. En particulier, de tels registres peuvent être configurés pour enregistrer des informations utilisées pour le fonctionnement du procédé de communication selon ses divers modes de réalisation.

Avantageusement, les deux unités communicantes 101, 102 sont configurées pour échanger des signaux transportant des données numériques représentant des échantillons numériques ou représentant des informations de contrôle utilisées pour le fonctionnement de différents protocoles de communication mis en oeuvre. Dans des modes de réalisation de l'invention, des signaux supplémentaires transportant des informations de contrôle peuvent être implémentés pour la mise en oeuvre du procédé de communication. Les signaux échangés sont formatés selon une forme d'onde définissant leurs caractéristiques, telles que par exemple le format de modulation et le débit binaire. Différentes formes d'onde peuvent être utilisées entre les deux unités communicantes 101, 102. Par exemple, deux formes d'onde peuvent être utilisées pour formater les signaux échangés selon leur sens de transmission, chargement (Upload) ou téléchargement (Download), défini par rapport à la première unité communicante 101. En particulier, le débit binaire peut être différent selon le sens de la transmission.

Le générateur de signaux d'horloge 103 est connecté à la première et à la seconde unité communicante 102 et peut être configuré pour fournir un signal d'horloge et/ou un signal de synchronisation à chacune des unités communicantes 101, 102. Les deux unités communicantes 101, 102 peuvent par exemple utiliser de tels signaux d'horloge pour définir leurs données numériques sur une même base temporelle et les transmettre à des instants d'émission particuliers. Les signaux de synchronisation peuvent par exemple être utilisés pour définir la fréquence d'échantillonnage des signaux reçus par chaque unité communicante 101, 102.

Dans un mode de réalisation de l'invention, la première unité communicante 101 est configurée pour contrôler la transmission de signaux transportant des échantillons numériques et issus de la seconde unité communicante 102. Un tel contrôle de transmission est mis en oeuvre en utilisant un signal d'activation de transmission émis de la première unité communicante 101 à la seconde unité communicante 102. La première unité communicante 101 transmet des signaux transportant des échantillons numériques directement vers la seconde unité communicante 102. Par ailleurs, des signaux transportant des informations de contrôle peuvent être échangés sans permission préalable entre les deux unités communicantes 101, 102. Ainsi, la première unité communicante 101 peut opérer selon un mode Maître (« Master »), alors que la seconde unité communicante 102 peut opérer selon un mode Esclave (« Slave »). La suite de la description sera faite en référence à un tel mode de réalisation dans lequel la première unité communicante 101 opère selon un mode Maître et la seconde unité communicante 102 opère selon un mode Esclave, à titre d'exemple illustratif.

La figure 2 représente le procédé de communication mis en oeuvre entre les deux unités communicantes 101, 102 selon un mode de réalisation de l'invention. Les étapes du procédé selon un tel mode de réalisation sont exécutées pendant une fenêtre temporelle de réception.

A l'étape 201, la première unité communicante 101 (Maître), transmet à la seconde unité communicante 102 (Esclave) un signal d'activation de transmission. La structure d'un signal d'activation de transmission peut être unique et reconnaissable par la seconde unité communicante 102. La représentation temporelle du signal d'activation de transmission peut être impulsionnelle. Elle peut comprendre par exemple une succession de bits à la valeur '0', suivie ou précédée par un ou plusieurs bits à la valeur '1'. La durée d'une impulsion peut être sensiblement égale à la période temporelle d'un échantillon numérique.

En réponse à la réception d'un signal d'activation de transmission, la seconde unité communicante 102 transmet des échantillons numériques initialement sauvegardés dans sa mémoire d'émission à la première unité communicante 101.

A l'étape 202, la seconde unité communicante 102 forme, si au moins un échantillon numérique est sauvegardé dans sa mémoire d'émission, un premier paquet d'échantillons numériques comprenant un corps, représentant la partie utile du paquet, et un marqueur de début de paquet, appelé aussi entête. Le corps d'un paquet peut comprendre au moins un échantillon numérique. Le marqueur de début de paquet comprend un champ indiquant le nombre d'échantillons numériques transportés dans le paquet d'échantillons numériques associé.

Dans des modes de réalisation de l'invention, une taille maximale peut être utilisée pour définir le nombre maximal d'échantillons numériques qu'un premier paquet peut transporter. Le paramètre de taille maximale peut être défini en nombre d'échantillons numériques. Dans un mode de réalisation, le paramètre de taille maximale peut être sauvegardé dans un registre interne de la seconde unité communicante 102. Ainsi, lorsque le nombre d'échantillons numériques sauvegardés dans la mémoire d'émission de la seconde unité communicante 102, avant réception d'un signal d'activation de transmission, est supérieur ou égal à la taille maximale des premiers paquets, le nombre d'échantillons numériques transportés dans le prochain premier paquet peut être égal à la taille maximale des premiers paquets.

A l'étape 203, la seconde unité communicante 102 transmet à la première unité communicante 101 un premier signal de données numériques transportant le premier paquet d'échantillons numériques. Le premier paquet d'échantillons numériques est d'abord transformé selon le protocole de communication « couche-physique » mis en oeuvre en un premier paquet d'échantillons numérique transformé. Le protocole de communication « couche-physique » est choisi parmi les deux protocoles JESD204B et JESD204C. Le premier signal de données numériques ensuite est obtenu par formatage selon une première forme d'onde à partir du premier paquet d'échantillons numériques transformé.

A l'étape 204, en réponse à la réception d'un premier signal de données numériques, la première unité communicante 101 détecte et extrait le marqueur de début de paquet transporté dans le premier signal de données numériques après démodulation et décodage. Le nombre d'échantillons numériques transportés dans le premier signal de données numériques reçu est alors déterminé à partir des informations extraites.

A l'étape 205, la première unité communicante 101 sauvegarde de manière séquentielle dans le temps les échantillons numériques reçus dans sa mémoire de réception, à partir de l'information relative au nombre d'échantillons numériques transportés dans le premier signal de données numériques reçu.

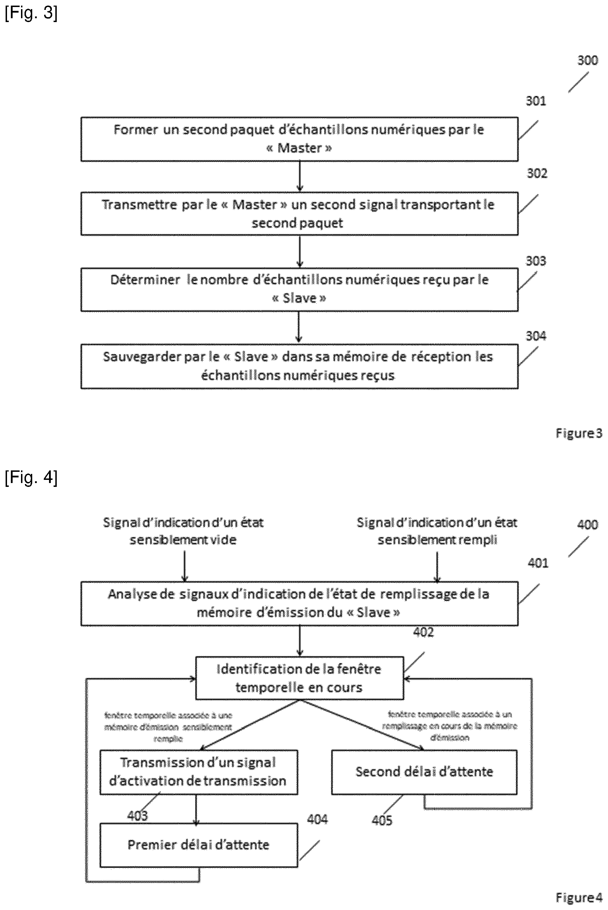

La figure 3 représente les étapes d'un procédé de communication mis en oeuvre entre les unités communicantes 101 et 102, selon un autre mode de réalisation de l'invention. Les étapes du procédé selon un tel mode de réalisation sont exécutées pendant une fenêtre temporelle d'émission. Dans un tel mode de réalisation de l'invention, la première unité communicante 101 transmet à la seconde unité communicante 102 un second paquet d'échantillons numériques.

A l'étape 301, si au moins un échantillon numérique est sauvegardé dans sa mémoire d'émission, la première unité communicante 101 forme un second paquet d'échantillons numériques présentant une structure similaire au premier paquet d'échantillons numérique formé par la seconde unité communicante 102 similairement à l'étape 202. Le second paquet d'échantillons numériques comprend un corps comprenant un ou plusieurs échantillons numériques et un marqueur de début de paquet indiquant le nombre d'échantillons numériques transportés.

Dans des modes de réalisation de l'invention, un paramètre de taille maximale peut être utilisé pour définir le nombre maximal d'échantillons numériques qu'un second paquet peut transporter. La taille maximale peut être définie en nombre d'échantillons numériques et peut être sauvegardée par exemple dans un registre interne de la première unité communicante 101. Ainsi, lorsque le nombre d'échantillons numériques sauvegardés dans la mémoire d'émission de la première unité communicante 101 est supérieur ou égal à la taille maximale des seconds paquets, le nombre d'échantillons numériques transportés dans le prochain second paquet est égal à la taille maximale des seconds paquets.

A l'étape 302, la première unité communicante 101 transmet à la seconde unité communicante 102 un second signal de données numériques transportant le second paquet d'échantillons numériques déjà formé. Le second paquet d'échantillons numériques est d'abord transformé selon le protocole de communication « couche-physique » mis en oeuvre en un second paquet d'échantillons numérique transformé. Le protocole de communication « couche-physique » est choisi parmi les deux protocoles JESD204B et JESD204C. Le second signal de données numériques peut ensuite être obtenu par formatage selon une deuxième forme d'onde à partir du second paquet d'échantillons numériques transformé.

A l'étape 303, en réponse à la réception d'un second signal de données numériques, la seconde unité communicante 102 détecte et extrait le marqueur de début de paquet transporté dans le second signal de données numériques reçu après démodulation et décodage. Le nombre d'échantillons numériques transporté dans le second signal de données numériques reçu est ensuite déterminé à partir des informations extraites.

A l'étape 304, la seconde unité communicante 102 peut sauvegarder de manière séquentielle dans le temps les échantillons numériques reçus dans sa mémoire de réception, à partir du nombre d'échantillons numériques transportés par le second signal de données numériques reçu.

Dans un autre mode de réalisation de l'invention, la seconde unité communicante 102 peut transmettre à la première unité communicante 101 des paquets muets, en réponse à la réception d'un signal d'activation de transmission, lorsque sa mémoire d'émission est vide, c'est-à-dire ne contient aucun échantillon numérique. La structure d'un paquet muet est définie pour être reconnaissable par la première unité communicante 101. Par exemple, un paquet muet peut être formé uniquement d'un corps comprenant des échantillons numériques identiques. La taille des paquets muets peut être fixe ou variable. La seconde unité communicante 102 peut, en outre, transmettre des paquets muets à la première unité communicante 101 instantanément suite à la transmission d'un premier paquet d'échantillons numériques et/ou en cas d'absence de signaux d'activation de transmission reçus en provenance de la première unité communicante 101.

Dans un autre mode de réalisation de l'invention, la première unité communicante 101 peut transmettre à la seconde unité communicante 102 des paquets muets, reconnaissables par la seconde unité communicante 102, en l'absence de paquets d'échantillons numériques à transmettre. Les paquets muets transmis par la première unité communicante 101 peuvent avoir la même structure et les mêmes propriétés que les paquets muets transmis par la seconde unité communicante 102.

Dans un mode de réalisation de l'invention, les deux unités communicantes 101, 102 peuvent être configurées de sorte à ne pas sauvegarder dans leur mémoire de réception les paquets muets reçus.

Dans un autre mode de réalisation de l'invention, le marqueur de début d'un premier ou d'un second paquet d'échantillons numériques peut comprendre quatre échantillons numériques. Les quatre échantillons numériques peuvent par exemple comprendre :
- trois premiers échantillons muets, identiques et codés sur 32 bits, ayant un modèle (pattern) fourni par un registre interne de la première unité communicante 101 ou de la seconde unité communicante 102 ;
- un quatrième échantillon comprenant un premier champ codé sur 16 bits et indiquant le nombre d'échantillons numériques transportés dans le paquet correspondant, le deuxième champ du quatrième échantillon étant le complément binaire du premier champ.

La taille maximale d'un paquet d'échantillons numériques selon de tels modes de réalisation peut être choisie inférieure à 8192. Par ailleurs, la taille maximale d'un premier paquet d'échantillons numériques peut être différente de la taille maximale d'un second paquet d'échantillons numériques.

Dans un autre mode de réalisation de l'invention, la première unité communicante 101 peut transmettre à la seconde unité communicante 102, de manière séquentielle dans le temps, plusieurs signaux d'activation de transmission. La fréquence de génération de signaux d'activation de transmission, définissant l'intervalle de temps en deux signaux d'activation de transmission successifs, peut être définie de manière à permettre un temps de garde entre deux premiers paquets successifs formés et transmis par la seconde unité communicante 102 à la première unité communicante 101 supérieur à la période temporelle d'un échantillon numérique, telle que définie par le protocole de communication « couche physique » mis en oeuvre.

La figure 4 représente un procédé de communication, selon un autre mode de réalisation de l'invention. Dans un tel mode de réalisation, la première unité communicante 101 remplit sa mémoire de réception par des échantillons numériques en provenance de la seconde unité communicante 102 en contrôlant l'état de remplissage de la mémoire d'émission de la seconde unité communicante 102. Des signaux d'indication de l'état de remplissage peuvent être définis et générés par la seconde unité communicante 102. Les signaux d'indication de l'état de remplissage sont des exemples de signaux échangés entre les deux unités communicantes 101, 102 qui transportent des informations de contrôle. De tels signaux d'indication de l'état de remplissage, définis en mode réception, peuvent comprendre un premier signal d'indication généré lorsqu'un seuil minimal, en nombre d'échantillons numériques, de la mémoire d'émission de la seconde unité communicante 102 est atteint. Un tel premier signal indique ainsi l'état sensiblement vide de la mémoire d'émission. De manière similaire, un second signal d'indication est généré lorsqu'un seuil maximal, en nombre d'échantillons numériques, de la mémoire d'émission de la seconde unité communicante 102 est atteint. Un tel second signal indique donc l'état sensiblement rempli de la mémoire d'émission. Par exemple, l'état sensiblement vide de la mémoire d'émission de la seconde unité communicante 102 peut correspondre à 10% de la taille totale de la mémoire d'émission, et l'état sensiblement rempli peut correspondre à 90% de la taille totale de la mémoire d'émission. Lorsque deux signaux d'indication successifs transportant la même information, sensiblement vide ou sensiblement rempli, sur l'état de remplissage de la mémoire d'émission de la seconde unité communicante 102 sont reçus, la première unité communicante 101 peut ignorer le deuxième signal d'indication.

A l'étape 401, la première unité communicante 101 reçoit les signaux d'indication de l'état de remplissage de la mémoire d'émission de la seconde unité communicante 102. Les signaux d'indication sont généralement reçus séquentiellement dans le temps. A l'issue de l'étape 401, la première unité communicante 101 peut définir une première fenêtre temporelle associée à un remplissage en cours de la mémoire d'émission de la seconde unité communicante 102 et pendant laquelle la transmission de signaux d'activation de transmission peut être bloquée. La première unité communicante 101 peut en outre définir une deuxième fenêtre temporelle associée à une mémoire d'émission sensiblement remplie et pendant laquelle la transmission de signaux d'activation de transmission peut être autorisée. Dans des modes de réalisation de l'invention, une fenêtre temporelle associée à une mémoire d'émission sensiblement remplie peut commencer à la réception d'un signal d'indication de l'état sensiblement rempli de la mémoire d'émission, et peut se terminer à la réception d'un signal d'indication de l'état sensiblement vide de la mémoire d'émission. En dehors des fenêtres temporelles associées à une mémoire d'émission sensiblement remplie, des fenêtres temporelles associées à une mémoire d'émission en cours de remplissage peuvent être définies.

A l'étape 402, la fenêtre temporelle en cours peut être identifiée. La fenêtre temporelle en cours peut être une fenêtre temporelle associée à un remplissage en cours de la mémoire d'émission de la seconde unité communicante 102 pendant laquelle la transmission de signaux d'activation de transmission peut être bloquée, ou une fenêtre temporelle associée à une mémoire d'émission sensiblement remplie pendant laquelle la transmission de signaux d'activation de transmission peut être autorisée.

L'étape 403 est mise en oeuvre lorsque la fenêtre temporelle en cours permet la transmission de signaux d'activation de transmission. A l'étape 403, un signal d'activation de transmission est transmis par la première unité communicante 101 à la seconde unité communicante 102.

A l'étape 404, mise en oeuvre en réponse à la transmission d'un signal d'activation de transmission, un premier délai d'attente est appliqué avant de réitérer l'étape 402 du procédé. Les premiers délais d'attente peuvent avoir une même durée, fixée en fonction d'une pluralité de paramètres comprenant la taille maximale des premiers paquets d'échantillons numériques.

A l'étape 405, mise en oeuvre lorsque la fenêtre temporelle en cours bloque la transmission de signaux d'activation de transmission, un second délai d'attente est appliqué avant de réitérer l'étape 402 du procédé.

Dans un autre mode de réalisation de l'invention, le remplissage de la mémoire de réception de la première unité communicante 101 par des échantillons numériques en provenance de la seconde unité communicante 102 peut s'effectuer de façon périodique sans utilisation de signaux d'indication de l'état de remplissage. Dans un tel mode de réalisation de l'invention, la première unité communicante 101 peut transmettre des signaux d'activation de transmission sans connaître l'état de remplissage de la mémoire d'émission de la seconde unité communicante 102. Alternativement, la première unité communicante peut transmettre des signaux d'activation de transmission après la réception d'un signal transportant des information de contrôle issu de la seconde unité communicante et indiquant la présence d'au moins un échantillon numérique dans la mémoire d'émission de la seconde unité communicante 102. Lorsque plusieurs paquets d'échantillons numériques sont présents dans la mémoire d'émission de la seconde unité communicante 102, la première unité communicante 101 peut recevoir de tels paquets en réponse à la transmission de plusieurs signaux d'activation de transmission. La fréquence d'émission de signaux d'activation de transmission peut être déterminée en fonction du rythme, c'est-à-dire la fréquence d'échantillonnage, de la première forme d'onde mise en oeuvre pour acheminer des données numériques de la seconde unité communicante 102 vers la première unité communicante 101. La fréquence d'émission de signaux d'activation de transmission peut, en outre, être déterminée en fonction de la taille maximale, en nombre d'échantillons numériques, des premiers paquets. Par exemple, la fréquence d'émission de signaux d'activation de transmission peut être égale au produit de la fréquence d'échantillonnage de la première forme d'onde par la taille maximale des premiers paquets d'échantillons numériques.

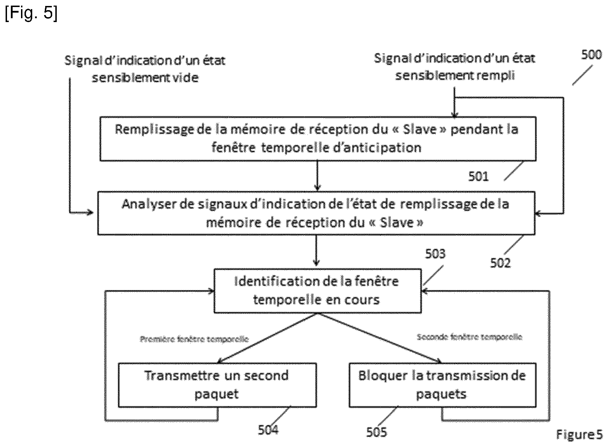

La figure 5 représente un procédé de communication, selon un autre mode de réalisation de l'invention. Dans un tel mode de réalisation, la première unité communicante 101 remplit la mémoire de réception de la seconde unité communicante 102 par des échantillons numériques en provenance de sa mémoire d'émission, en contrôlant l'état de remplissage de la mémoire de réception de la seconde unité communicante 102 au moyen de plusieurs signaux d'indication de l'état de remplissage. De tels signaux d'indication, définis en mode émission, peuvent comprendre un premier signal d'indication de l'état sensiblement vide et un second signal d'indication de l'état sensiblement remplie. La définition d'un état sensiblement vide et d'un état sensiblement rempli de la mémoire de réception de la seconde unité communicante 102 est similaire à la définition de ces états en mode réception.

A l'étape 501, la première unité communicante 101 définit une fenêtre temporelle d'anticipation dont la durée maximale est donnée par le produit de la fréquence d'échantillonnage de la seconde forme d'onde par le seuil maximal, en nombre d'échantillons numériques, de la mémoire de réception de la seconde unité communicante 102. Le seuil maximal correspond à la génération d'un second signal d'indication de l'état de remplissage. Pendant la fenêtre temporelle d'anticipation, la première unité communicante 101 transmet en continue des seconds paquets d'échantillons numériques à la seconde unité communicante 102. La transmission des seconds paquets d'échantillons numériques peut être stoppée, pendant la fenêtre temporelle d'anticipation, suite à la réception d'un second signal d'indication indiquant un état sensiblement rempli de la mémoire de réception de la seconde unité communicante 102.

Les étapes suivantes du procédé peuvent être exécutées, en réponse à l'écoulement de la fenêtre temporelle d'anticipation.

A l'étape 502, les signaux d'indication de l'état de remplissage de la mémoire de réception de la seconde unité communicante 102 sont reçus et analysés. Des premières fenêtres temporelles pendant lesquelles la transmission des paquets d'échantillons numériques vers la seconde unité communicante 102 peut être autorisée, et des secondes fenêtres temporelles pendant lesquelles la transmission des paquets d'échantillons numériques vers la seconde unité communicante 102 peut être bloquée sont ensuite définies à partir des signaux d'indication analysés. Dans un mode de réalisation de l'invention, une première fenêtre temporelle peut être définie entre l'instant de réception d'un signal d'indication indiquant un état sensiblement vide de la mémoire de réception et l'instant de réception d'un signal d'indication indiquant un état sensiblement rempli de la mémoire de réception. En dehors des premières fenêtres temporelles pendant lesquelles la transmission des paquets d'échantillons numériques est autorisée, des secondes fenêtres temporelles pendant lesquelles la transmission des paquets d'échantillons numériques est bloquée peuvent être définies.

A l'étape 503, la fenêtre temporelle en cours définie à l'étape 502 du procédé est identifiée. Cette fenêtre temporelle peut être une première fenêtre temporelle pendant laquelle la transmission de paquets d'échantillons numériques est permise, ou une seconde fenêtre temporelle pendant laquelle la transmission de paquets d'échantillons numériques est bloquée.

A l'étape 504, mise en oeuvre lorsque la première fenêtre temporelle est en cours, des paquets d'échantillons numériques sont transmis de manière séquentielle dans le temps par la première unité communicante 101 à la seconde unité communicante 102. L'étape 503 du procédé peut être réitérée après la transmission d'un paquet d'échantillons numériques par la première unité communicante 101.

A l'étape 505, mise en oeuvre lorsque la seconde fenêtre temporelle est en cours, la transmission de paquets d'échantillons numériques par la première unité communicante 101 à la seconde unité communicante 102 est bloquée. L'étape 503 du procédé peut être réitérée après l'exécution de l'étape de 505 du procédé.

Dans un autre mode de réalisation de l'invention, le remplissage de la mémoire de réception de la seconde unité communicante 102 par des échantillons numériques en provenance de la première unité communicante 101 peut s'effectuer de façon périodique sans utilisation de signaux d'indication de l'état de remplissage. Dans un tel mode de réalisation de l'invention, la première unité communicante 101 peut transmettre des paquets d'échantillons numériques à la seconde unité communicante 102 de manière périodique selon une fréquence d'émission des seconds paquets dépendant du rythme de la seconde forme d'onde et de la taille maximale des seconds paquets d'échantillons numériques. La transmission des seconds paquets d'échantillons numériques selon de tels modes de réalisation de l'invention commence dès qu'un paquet d'échantillons numériques est présent dans la mémoire d'émission de la première unité communicante 101.

Dans des modes de réalisation de l'invention, la transmission de premiers paquets d'échantillons numériques de la seconde unité communicante 102 vers la première unité communicante 101 peut s'effectuer de manière simultanée dans le temps avec la transmission de seconds paquets d'échantillons numériques de la première unité communicante 101 vers la seconde unité communicante 102.

Dans d'autres modes de réalisation de l'invention, le protocole de communication régissant la transmission série des échantillons numériques est choisi parmi la famille de protocoles JESD204B et JESD204C.

Le procédé et le système de communication, selon les mode de réalisation de l'invention, permettent une transmission selon un mode paquet où des paquets d'échantillons numériques sont formés et transmis d'une unité communicante à une autre, de manière sporadique et en fonction des besoins en transmission de chaque unité communicante, contrairement aux procédés de communication de l'état de la technique qui utilisent un protocole de communication opérant à haut débit, généralement supérieur à 1 Gb/s, de manière symétrique et continue dans le temps, même en absence d'échantillons numériques à transmettre.

Le procédé et le système de communication, selon les modes de réalisation de l'invention, permettent ainsi des gains en termes de puissance de calcul et de consommation d'énergie.

Par ailleurs, les modes de réalisation de l'invention permettent de gérer l'échange de paquets de données numériques au niveau de l'une des unités communicantes. Les deux unités communicantes 101, 102 ne nécessitent pas ainsi de disposer de mêmes fonctionnalités. Par conséquent, la complexité matérielle et logicielle de la seconde unité communicante 102 peut être fortement réduite. Par ailleurs, l'échange des paquets d'échantillons numériques peut être géré en contrôlant uniquement la première unité communicante 101.

Les modes de réalisation de l'invention permettent en outre des transmissions selon un débit de données numériques ajustable à partir de 0 Gb/s (absence d'échantillons numériques à transmettre), le débit maximal étant celui du protocole « couche physique » régissant la transmission d'échantillons numériques, par exemple 32 Gb/s pour le protocole le JESD204C.

L'homme du métier comprendra que le procédé de communication selon les modes de réalisation peut être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

## Revendications

1. Procédé de communication bidirectionnel entre une première unité communicante (101) et une seconde unité communicante (102) comprenant chacune une mémoire d'émission et une mémoire de réception destinées à sauvegarder des échantillons numériques, un protocole de communication « couche-physique » étant utilisé pour régir la transmission série des échantillons numériques entre les deux unités communicantes (101, 102), ledit protocole de communication « couche-physique » étant choisi parmi les protocoles JESD204B et JESD204C. le procédé comprend les étapes suivantes exécutées, pendant une fenêtre temporelle de réception, par la seconde unité communicante (102), en réponse à la réception d'un signal d'activation de transmission de la première unité communicante (101) :
- si au moins un échantillon numérique est sauvegardé dans la mémoire d'émission de la seconde unité communicante (102), former un premier paquet d'échantillons numériques, ledit premier paquet d'échantillons numériques comprenant au moins : un corps et un marqueur de début de paquet, ledit corps comprenant au moins un échantillon numérique, ledit marqueur de début de paquet comprenant un champ indiquant la taille, en nombre d'échantillons numériques transportés, d'un paquet d'échantillons numériques ;
- transmettre à la première unité communicante (101) un premier signal de données numériques transportant le premier paquet d'échantillons numériques formé, le premier paquet d'échantillons numériques étant transformé selon ledit protocole de communication « couche-physique », le premier signal de données numériques étant obtenu par formatage selon une première forme d'onde à partir du premier paquet d'échantillons numériques transformé ;
la première unité communicante (101) transmettant ledit signal d'activation de transmission en fonction de l'état de remplissage de la mémoire d'émission de la seconde unité (102) et déterminant, en réponse à la réception du premier signal de données numériques, le nombre d'échantillons numériques transportés dans le paquet d'échantillons numériques reçu, à partir du marqueur de début de paquet.

2. Procédé de communication selon la revendication 1, **caractérisé en ce qu'**il comprend en outre la sauvegarde, dans la mémoire de réception de la première unité communicante (101), des échantillons numériques transportés dans le premier paquet d'échantillons numériques reçu par la première unité communicante (101).

3. Procédé selon l'une des revendications précédentes, **caractérisé en ce qu'**il comprend la transmission, pendant une fenêtre temporelle d'émission, d'un second paquet d'échantillons numériques de la première unité communicante (101) à la seconde unité communicante (102), la transmission du second paquet d'échantillons numériques comprenant les étapes suivantes mises en oeuvre par la première unité communicante (101) en fonction de l'état de remplissage de la mémoire de réception de la seconde unité (102) :
- si au moins un échantillon numérique est sauvegardé dans la mémoire d'émission de la première unité communicante (101), former un second paquet d'échantillons numériques comprenant au moins un corps comprenant au moins un échantillon numérique, et un marqueur de début de paquet ;
- transmettre à la seconde unité communicante (102) un second signal de données numériques transportant le second paquet d'échantillons numériques, le second paquet d'échantillons numériques étant transformé selon le protocole de communication « couche-physique », le second signal de données numériques étant obtenu par formatage selon une seconde forme d'onde à partir du second paquet d'échantillons numériques transformé ;
la seconde unité communicante (102) déterminant, en réponse à la réception du second signal de données numériques, le nombre d'échantillons numériques transportés dans le paquet d'échantillons numériques reçu, à partir du marqueur de début de paquet.

4. Procédé selon la revendication 3, **caractérisé en ce qu'**il comprend en outre la sauvegarde, dans la mémoire de réception de la seconde unité communicante (102), des échantillons numériques transportés dans le second paquet d'échantillons numériques reçu par la seconde unité communicante (102).

5. Procédé selon la revendication 1, **caractérisé en ce qu'**il comprend, si le nombre d'échantillons numériques dans la mémoire d'émission, avant l'étape de formation d'un paquet d'échantillons numériques, est supérieur ou égal à une taille maximale prédéfinie, la fixation de la taille d'un paquet d'échantillons numériques à ladite taille maximale prédéfinie.

6. Procédé selon les revendications 1 et 5, **caractérisé en ce que** la taille maximale du premier paquet d'échantillons numériques est différente de la taille maximale du second paquet d'échantillons numériques.

7. Procédé selon la revendication 6, **caractérisé en ce que** la taille maximale d'un paquet d'échantillons numériques est comprise entre 1 échantillon et 8192 échantillons.

8. Procédé selon l'une des revendications précédentes, **caractérisé en ce qu'**il comprend une transmission séquentielle de paquets d'échantillons numériques muets de la seconde unité communicante (102) à la première unité communicante (101) :
- en réponse à la réception par la seconde unité communicante (102) d'un signal d'activation de transmission, si la mémoire d'émission de la seconde unité communicante (102) est vide ; ou
- en l'absence de réception de signal d'activation de transmission.

9. Procédé selon l'une des revendications précédentes, **caractérisé en ce qu'**il comprend une transmission séquentielle de paquets d'échantillons numériques muets de la première unité communicante (101) à la seconde unité communicante (102) si la mémoire d'émission de la première unité communicante est vide.

10. Procédé selon l'une des revendications précédentes, **caractérisé en ce qu'**il comprend une transmission séquentielle de plusieurs signaux d'activation de transmission, lesdits signaux d'activation de transmission étant généré selon une fréquence d'émission de signaux d'activation de transmission telle qu'il existe un temps de garde entre deux premiers paquets d'échantillons numériques successifs supérieur à la période temporelle d'un échantillon numérique définie par le protocole de communication « couche-physique ».

11. Procédé selon l'une quelconque des revendications précédentes, **caractérisé en ce qu'**il comprend un remplissage de la mémoire de réception de la première unité communicante (101) par des échantillons numériques provenant de la mémoire d'émission de la seconde unité communicante (102) en utilisant des signaux d'indication de l'état de remplissage par des échantillons numériques de la mémoire d'émission de la seconde unité communicante (102), lesdits signaux d'indication étant définis en mode réception et comprenant :
- un premier signal d'indication généré lorsqu'un seuil minimal, en nombre d'échantillons numériques, est atteint dans la mémoire d'émission de la seconde unité communicante (102) ;
- un second signal d'indication généré lorsqu'un seuil maximal, en nombre d'échantillons numériques, est atteint dans la mémoire d'émission de la seconde unité communicante (102) ;
et **en ce que** la transmission de signaux d'activation de transmission par la première unité communicante (101) est mise en oeuvre pendant des fenêtres temporelles associées à une mémoire d'émission sensiblement remplie, chacune des fenêtres temporelles associées à une mémoire d'émission sensiblement remplie étant délimitée par l'instant temporel de la réception d'un second signal d'indication et l'instant temporel de la réception d'un premier signal d'indication.

12. Procédé selon les revendications précédentes 1 à 10, **caractérisé en ce qu'**il comprend un remplissage de la mémoire de réception de la première unité communicante (101) par des échantillons numériques provenant de la mémoire d'émission de la seconde unité communicante (102), ledit remplissage étant mis en oeuvre de manière périodique, la fréquence d'émission des signaux d'activation de transmission étant définie en fonction du rythme de la première forme d'onde et de la taille maximale des premiers paquets d'échantillons numériques.

13. Procédé selon l'une quelconque des revendications précédentes, **caractérisé en ce qu'**il comprend un remplissage de la mémoire de réception de la seconde unité communicante (102) par des échantillons numériques provenant de la mémoire d'émission de la première unité communicante (101) en utilisant des signaux d'indication de l'état de remplissage de la mémoire de réception de la seconde unité communicante (102), lesdits signaux d'indication étant définis en mode émission et comprenant :
- un premier signal d'indication généré lorsqu'un seuil minimal, en nombre d'échantillons numériques, est atteint dans la mémoire de réception de la seconde unité communicante (102) ;
- un second signal d'indication généré lorsqu'un seuil maximal, en nombre d'échantillons numériques, est atteint dans la mémoire de réception de la seconde unité communicante (102) ;
et **en ce que** la transmission de paquets d'échantillons numériques par la première unité communicante (101) est mise en oeuvre dans des premières fenêtres temporelles pendant lesquelles la transmission de paquets d'échantillons numériques est autorisée, chacune desdites premières fenêtres temporelles étant délimitée par l'instant temporel de la réception d'un premier signal d'indication et l'instant temporel de la réception d'un second signal d'indication.

14. Procédé selon les revendications 1 à 12, **caractérisé en ce qu'**il comprend un remplissage de la mémoire de réception de la seconde unité communicante (102) par des échantillons numériques provenant de la mémoire d'émission de la première unité communicante (101), ledit remplissage étant mis en oeuvre de manière périodique, la fréquence d'émission de seconds paquets d'échantillons numériques étant définie en fonction du rythme de la seconde forme d'onde et de la taille maximale des seconds paquets d'échantillons numériques.

15. Système de communication (100) comprenant une première unité communicante (101) et une seconde unité communicante (102), lesdites unités communicantes étant configurées pour échanger des paquets d'échantillons numériques en mettant en oeuvre un procédé de communication, selon l'une des revendications 1 à 14.

## Patentansprüche

1. Verfahren zur bidirektionalen Kommunikation zwischen einer ersten kommunizierenden Einheit (101) und einer zweiten kommunizierenden Einheit (102), umfassend jeweils einen Sendespeicher und einen Empfangsspeicher, die dafür geeignet sind, digitale Abtastungswerte zu speichern, ein "Übertragungsschicht"-Kommunikationsprotokoll, das dafür verwendet wird, die Reihenübertragung der digitalen Abtastungswerte zwischen den beiden kommunizierenden Einheiten (101, 102) zu regeln, wobei das "Übertragungsschicht"-Kommunikationsprotokoll aus den Protokollen JESD204B und JESD204C ausgewählt ist, wobei das Verfahren die folgenden Schritte umfasst, die während eines Empfangszeitfensters von der zweiten kommunizierenden Einheit (102) als Reaktion auf den Empfang eines Übertragungsaktivierungssignals von der ersten kommunizierenden Einheit (101) ausgeführt werden:
- wenn mindestens ein digitaler Abtastungswert in dem Sendespeicher der zweiten kommunizierenden Einheit (102) gespeichert wird, Bilden eines ersten Pakets von digitalen Abtastungswerten, wobei das erste Paket von digitalen Abtastungswerten mindestens Folgendes umfasst: einen Hauptteil und einen Paketanfangsmarker, wobei der Hauptteil mindestens einen digitalen Abtastungswert umfasst, wobei der Paketanfangsmarker ein Feld umfasst, das die Größe eines Pakets von digitalen Abtastungswerten als Anzahl der transportierten digitalen Abtastungswerte angibt;
- Übertragen eines ersten Signals von digitalen Daten, die das erste gebildete Paket von digitalen Abtastungswerten transportieren, auf die erste kommunizierende Einheit (101), wobei das erste Paket von digitalen Abtastungswerten gemäß dem "Übertragungsschicht"-Kommunikationsprotokoll umgewandelt wird, wobei das erste Signal von digitalen Daten durch Formatierung gemäß einer ersten Wellenform vom ersten umgewandelten Paket von digitalen Abtastungswerten erhalten wird;
wobei die erste kommunizierende Einheit (101) das Übertragungsaktivierungssignal als Funktion des Füllzustands des Sendespeichers der zweiten Einheit (102) überträgt und als Reaktion auf den Empfang des ersten Signals von digitalen Daten die Anzahl von in dem empfangenen Paket von digitalen Abtastungswerten transportierten digitalen Abtastungswerten aus dem Paketanfangsmarker bestimmt.

2. Kommunikationsverfahren nach Anspruch 1, **dadurch gekennzeichnet, dass** es ferner das Speichern, in dem Empfangsspeicher der ersten kommunizierenden Einheit (101), der in dem ersten Paket von digitalen Abtastungswerten, das von der ersten kommunizierenden Einheit (101) empfangen wurde, transportierten digitalen Abtastungswerte umfasst.

3. Verfahren nach einem der vorhergehenden Ansprüche, **dadurch gekennzeichnet, dass** es das Übertragen, während eines Sendezeitfensters, eines zweiten Pakets von digitalen Abtastungswerten von der ersten kommunizierenden Einheit (101) auf die zweite kommunizierende Einheit (102) umfasst, wobei das Übertragen des zweiten Pakets von digitalen Abtastungswerten die folgenden Schritte umfasst, die durch die erste kommunizierende Einheit (101) als Funktion des Füllzustands des Empfangsspeichers der zweiten Einheit (102) ausgeführt werden:
- wenn mindestens ein digitaler Abtastungswert in dem Sendespeicher der ersten kommunizierenden Einheit (101) gespeichert ist, Bilden eines zweiten Pakets von digitalen Abtastungswerten, umfassend mindestens einen Hauptteil, umfassend mindestens einen digitalen Abtastungswert und einen Paketanfangsmarker;
- Übertragen eines zweiten Signals von digitalen Daten, die das zweite Paket von digitalen Abtastungswerten transportieren, auf die zweite kommunizierende Einheit (102), wobei das zweite Paket von digitalen Abtastungswerten gemäß dem "Übertragungsschicht"-Kommunikationsprotokoll umgewandelt wird, wobei das zweite Signal von digitalen Daten durch Formatierung gemäß einer zweiten Wellenform aus dem zweiten umgewandelten Paket von digitalen Abtastungswerten erhalten wird;
wobei die zweite kommunizierende Einheit (102) als Reaktion auf den Empfang des zweiten Signals von digitalen Daten die Zahl von transportierten digitalen Abtastungswerten in dem empfangenen Paket von digitalen Abtastungswerten aus dem Paketanfangsmarker bestimmt.

4. Verfahren nach Anspruch 3, **dadurch gekennzeichnet, dass** es ferner das Speichern, in dem Empfangsspeicher der zweiten kommunizierenden Einheit (102), der in dem zweiten Paket von digitalen Abtastungswerten, das von der zweiten kommunizierenden Einheit (102) empfangen wurde, transportierten digitalen Abtastungswerte umfasst.

5. Verfahren nach Anspruch 1, **dadurch gekennzeichnet, dass** es, wenn die Zahl der digitalen Abtastungswerte in dem Sendespeicher vor dem Schritt der Bildung eines Pakets von digitalen Abtastungswerten größer oder gleich einer maximalen vorbestimmten Größe ist, das Festlegen der Größe eines Pakets von digitalen Abtastungswerten auf die vorbestimmte maximale Größe umfasst.

6. Verfahren nach Ansprüchen 1 und 5, **dadurch gekennzeichnet, dass** die maximale Größe des ersten Pakets von digitalen Abtastungswerten sich von der maximalen Größe des zweiten Pakets von digitalen Abtastungswerten unterscheidet.

7. Verfahren nach Anspruch 6, **dadurch gekennzeichnet, dass** die maximale Größe eines Pakets von digitalen Abtastungswerten zwischen 1 Abtastungswert und 8192 Abtastungswerten liegt.

8. Verfahren nach einem der vorhergehenden Ansprüche, **dadurch gekennzeichnet, dass** es eine sequentielle Übertragung von stummen Paketen von digitalen Abtastungswerten von der zweiten kommunizierenden Einheit (102) auf die erste kommunizierende Einheit (101) umfasst, und zwar:
- als Reaktion auf den Empfang eines Übertragungsaktivierungssignals durch die zweite kommunizierende Einheit (102), wenn der Sendespeicher der zweiten kommunizierenden Einheit (102) leer ist; oder
- bei Fehlen des Empfangs eines Übertragungsaktivierungssignals.

9. Verfahren nach einem der vorhergehenden Ansprüche, **dadurch gekennzeichnet, dass** es eine sequentielle Übertragung von stummen Paketen von digitalen Abtastungswerten von der ersten kommunizierenden Einheit (101) auf die zweite kommunizierende Einheit (102) umfasst, wenn der Sendespeicher der ersten kommunizierenden Einheit leer ist.

10. Verfahren nach einem der vorhergehenden Ansprüche, **dadurch gekennzeichnet, dass** es eine sequentielle Übertragung von mehreren Übertragungsaktivierungssignalen umfasst, wobei die Übertragungsaktivierungssignale gemäß einer Sendefrequenz von Übertragungsaktivierungssignalen erzeugt werden, so dass eine Schutzzeit zwischen zwei ersten aufeinanderfolgenden Paketen von digitalen Abtastungswerten besteht, die länger als der Zeitraum eines digitalen Abtastungswertes ist, der durch das "Übertragungsschicht"-Kommunikationsprotokoll definiert ist.

11. Verfahren nach einem der vorhergehenden Ansprüche, **dadurch gekennzeichnet, dass** es ein Füllen des Empfangsspeichers der ersten kommunizierenden Einheit (101) mit digitalen Abtastungswerten umfasst, die aus dem Sendespeicher der zweiten kommunizierenden Einheit (102) stammen, unter Verwendung von Signalen zum Anzeigen des Füllzustands durch digitale Abtastungswerte des Sendespeichers der zweiten kommunizierenden Einheit (102), wobei die Anzeigesignale in Empfangsmodus definiert sind und Folgendes umfassen:
- ein erstes Anzeigesignal, das erzeugt wird, wenn eine Mindestschwelle, als eine Anzahl von digitalen Abtastungswerten, in dem Sendespeicher der zweiten kommunizierenden Einheit (102) erreicht ist;
- ein zweites Anzeigesignal, das erzeugt wird, wenn eine Höchstschwelle, als eine Anzahl von digitalen Abtastungswerten, in dem Sendespeicher der zweiten kommunizierenden Einheit (102) erreicht ist;
und dass die Übertragung von Übertragungsaktivierungssignalen durch die erste kommunizierende Einheit (101) während Zeitfenstern ausgeführt wird, die einem im Wesentlichen gefüllten Sendespeicher zugeordnet sind, wobei jedes der Zeitfenster, das einem im Wesentlichen gefüllten Sendespeicher zugeordnet ist, durch den Zeitpunkt des Empfangs eines zweiten Anzeigesignals und den Zeitpunkt des Empfangs eines ersten Anzeigesignals begrenzt ist.

12. Verfahren nach den vorhergehenden Ansprüchen 1 bis 10, **dadurch gekennzeichnet, dass** es ein Füllen des Empfangsspeichers der ersten kommunizierenden Einheit (101) mit digitalen Abtastungswerten umfasst, die von dem Sendespeicher der zweiten kommunizierenden Einheit (102) stammen, wobei das Füllen periodisch ausgeführt wird, wobei die Sendefrequenz der Übertragungsaktivierungssignale als Funktion des Rhythmus der ersten Wellenform und der maximalen Größe der ersten Pakete von digitalen Abtastungswerten definiert ist.

13. Verfahren nach einem der vorhergehenden Ansprüche, **dadurch gekennzeichnet, dass** es ein Füllen des Empfangsspeichers der zweiten kommunizierenden Einheit (102) mit digitalen Abtastungswerten umfasst, die aus dem Sendespeicher der ersten kommunizierenden Einheit (101) stammen, unter Verwendung von Signalen zum Anzeigen des Füllzustands des Empfangsspeichers der zweiten kommunizierenden Einheit (102), wobei die Anzeigesignale in Sendemodus definiert sind und Folgendes umfassen:
- ein erstes Anzeigesignal, das erzeugt wird, wenn eine Mindestschwelle, als eine Anzahl von digitalen Abtastungswerten, in dem Empfangsspeicher der zweiten kommunizierenden Einheit (102) erreicht ist;
- ein zweites Anzeigesignal, das erzeugt wird, wenn eine Höchstschwelle, als eine Anzahl von digitalen Abtastungswerten, in dem Empfangsspeicher der zweiten kommunizierenden Einheit (102) erreicht ist;
und dass die Übertragung von Paketen von digitalen Abtastungswerten durch die erste kommunizierende Einheit (101) in ersten Zeitfenstern ausgeführt wird, während welchen die Übertragung von Paketen von digitalen Abtastungswerten autorisiert ist, wobei jedes der ersten Zeitfenster durch den Zeitpunkt des Empfangs eines ersten Anzeigesignals und den Zeitpunkt des Empfangs eines zweiten Anzeigesignals begrenzt ist.

14. Verfahren nach den Ansprüchen 1 bis 12, **dadurch gekennzeichnet, dass** es ein Füllen des Empfangsspeichers der zweiten kommunizierenden Einheit (102) mit digitalen Abtastungswerten umfasst, die von dem Sendespeicher der ersten kommunizierenden Einheit (101) stammen, wobei das Füllen periodisch ausgeführt wird, wobei die Sendefrequenz von zweiten Paketen von digitalen Abtastungswerten als Funktion des Rhythmus der zweiten Wellenform und der maximalen Größe der zweiten Pakete von digitalen Abtastungswerten definiert ist.

15. Kommunikationssystem (100), umfassend eine erste kommunizierende Einheit (101) und eine zweite kommunizierende Einheit (102), wobei die kommunizierenden Einheiten dafür konfiguriert sind, Pakete von digitalen Abtastungswerten auszutauschen, indem ein Kommunikationsverfahren nach einem der Ansprüche 1 bis 14 ausgeführt wird.

## Claims

1. A method for bidirectional communication between a first communicating unit (101) and a second communicating unit (102) which each comprise a transmission memory and a receiving memory which are intended to save digital samples, a "physical layer" communication protocol being used to control the series transmission of the digital samples between the two communicating units (101, 102), said "physical layer" communication protocol being selected from the protocols JESD204B and JESD204C, the method comprising the following steps which are carried out during a receiving time window by the second communicating unit (102) in response to receiving a transmission activation signal from the first communicating unit (101):
- if at least one digital sample is saved in the transmission memory of the second communicating unit (102), forming a first packet of digital samples, said first packet of digital samples comprising at least: a body and a start of packet marker, said body comprising at least one digital sample, said start of packet marker comprising a field which indicates the size, in terms of a number of transported digital samples, of a packet of digital samples;
- transmitting to the first communicating unit (101) a first digital data signal which transports the formed first packet of digital samples, the first packet of digital samples being transformed in accordance with said "physical layer" communication protocol, the first digital data signal being obtained by formatting in accordance with a first wave shape from the transformed first packet of digital samples;
the first communicating unit (101) transmitting said transmission activation signal as a function of the filling state of the transmission memory of the second unit (102) and determining, in response to receiving the first digital data signal, the number of digital samples transported in the received packet of digital samples, from the start of packet marker.

2. The communication method according to claim 1, **characterised in that** it further comprises saving, in the receiving memory of the first communicating unit (101), the digital samples which are transported in the first packet of digital samples received by the first communicating unit (101).

3. The method according to one of the preceding claims, **characterised in that** it comprises the transmission, for a transmission time window, of a second packet of digital samples from the first communicating unit (101) to the second communicating unit (102), the transmission of the second packet of digital samples comprising the following steps which are implemented by the first communicating unit (101) as a function of the filling state of the receiving memory of the second unit (102):
- if at least one digital sample is saved in the transmission memory of the first communicating unit (101), forming a second packet of digital samples which comprise at least one body which comprises at least one digital sample, and a start of packet marker;
- transmitting to the second communicating unit (102) a second digital data signal which transports the second packet of digital samples, the second packet of digital samples being transformed in accordance with the "physical layer" communication protocol, the second digital data signal being obtained by formatting in accordance with a second wave shape from the transformed second packet of digital samples;
the second communicating unit (102) determining, in response to receiving the second digital data signal, the number of digital samples transported in the received packet of digital samples, from the start of packet marker.

4. The method according to claim 3, **characterised in that** it further comprises saving, in the receiving memory of the second communicating unit (102), the digital samples which are transported in the second packet of digital samples received by the second communicating unit (102).

5. The method according to claim 1, **characterised in that** it comprises, if the number of digital samples in the transmission memory, before the step of forming a packet of digital samples, is greater than or equal to a maximum predefined size, fixing the size of a packet of digital samples at said maximum predefined size.

6. The method according to claims 1 and 5, **characterised in that** the maximum size of the first packet of digital samples is different from the maximum size of the second packet of digital samples.

7. The method according to claim 6, **characterised in that** the maximum size of a packet of digital samples is between 1 sample and 8192 samples.

8. The method according to any one of the preceding claims, **characterised in that** it comprises a sequential transmission of silent packet of digital samples from the second communicating unit (102) to the first communicating unit (101):
- in response to the second communicating unit (102) receiving a transmission activation signal, if the transmission memory of the second communicating unit (102) is empty; or
- in the absence of receiving a transmission activation signal.

9. The method according to any one of the preceding claims, **characterised in that** it comprises a sequential transmission of silent packet of digital samples from the first communicating unit (101) to the second communicating unit (102) if the transmission memory of the first communicating unit is empty.

10. The method according to any one of the preceding claims, **characterised in that** it comprises a sequential transmission of multiple transmission activation signals, said transmission activation signals being generated in accordance with a transmission frequency of transmission activation signals such that there is a guard time between two first successive packets of digital samples which is greater than the time period of a digital sample defined by the "physical layer" communication protocol.

11. The method according to any one of the preceding claims, **characterised in that** it comprises filling the receiving memory of the first communicating unit (101) with digital samples originating from the transmission memory of the second communicating unit (102) using indication signals indicating the filling state with digital samples of the transmission memory of the second communicating unit (102), said indication signals being defined in receiving mode and comprising:
- a first indication signal which is generated when a minimum threshold, in terms of a number of digital samples, is reached in the transmission memory of the second communicating unit (102);
- a second indication signal which is generated when a maximum threshold, in terms of a number of digital samples, is reached in the transmission memory of the second communicating unit (102);
and **in that** the transmission of transmission activation signals by the first communicating unit (101) is implemented during time windows which are associated with a substantially full transmission memory, each of the time windows which are associated with a substantially full transmission memory being delimited by the time of receipt of a second indication signal and the time of receipt of a first indication signal.

12. The method according to the preceding claims 1 to 10, **characterised in that** it comprises filling the receiving memory of the first communicating unit (101) with digital samples originating from the transmission memory of the second communicating unit (102), said filling being implemented in a periodic manner, the frequency of transmission of the transmission activation signals being defined as a function of the rhythm of the first wave shape and the maximum size of the first packets of digital samples.

13. The method according to any one of the preceding claims, **characterised in that** it comprises filling the receiving memory of the second communicating unit (102) with digital samples originating from the transmission memory of the first communicating unit (101) using indication signals indicating the filling state of the receiving memory of the second communicating unit (102), said indication signals being defined in transmission mode and comprising:
- a first indication signal which is generated when a minimum threshold, in terms of a number of digital samples, is reached in the receiving memory of the second communicating unit (102);
- a second indication signal which is generated when a maximum threshold, in terms of a number of digital samples, is reached in the receiving memory of the second communicating unit (102);
and **in that** the transmission of packets of digital samples by the first communicating unit (101) is implemented in first time windows during which the transmission of packets of digital samples is authorised, each of said first time windows being delimited by the time of receipt of a first indication signal and the time of receipt of a second indication signal.

14. The method according to claims 1 to 12, **characterised in that** it comprises filling the receiving memory of the second communicating unit (102) with digital samples originating from the transmission memory of the first communicating unit (101), said filling being implemented periodically, the transmission frequency of second packets of digital samples being defined as a function of the rhythm of the second wave shape and the maximum size of the second packets of digital samples.

15. A communication system (100) comprising a first communicating unit (101) and a second communicating unit (102), said communicating units being configured to exchange packets of digital samples by implementing a communication method in accordance with any one of claims 1 to 14.
